(19) Europäisches Patentamt
European Patent Office
Office européen des brevets

(11) Publication number: **0 107 048**
**A1**

(12) **EUROPEAN PATENT APPLICATION**

(21) Application number: **83109435.4**

(22) Date of filing: **22.09.83**

(51) Int. Cl.³: **C 08 L 69/00**
// (C08L69/00, 67/02, 51/00)

(30) Priority: **30.09.82 US 431586**

(43) Date of publication of application: **02.05.84**
**Bulletin 84/18**

(84) Designated Contracting States: **DE FR GB IT NL**

(71) Applicant: **GENERAL ELECTRIC COMPANY, 1 River Road, Schenectady New York 12305 (US)**

(72) Inventor: **Allen, Richard Brian, 525 Windsor Road, Dalton Massachusetts 01226 (US)**
Inventor: **Giles, Harold Frazee, Jr., Wilshire Drive, Cheshire Massachusetts 01201 (US)**
Inventor: **Heuschen, Jean Marie Hubert, Konijnenberg 13, NL-4661 HA Halsteren (NL)**
Inventor: **Wiercinski, Robert Alan, 3 Roberts Road, Cambridge Massachusetts 02138 (US)**

(74) Representative: **Schüler, Horst, Dr. European Patent Attorney et al, Kaiserstrasse 41, D-6000 Frankfurt/Main 1 (DE)**

(54) **Acrylic modified compositions of polycarbonate and polyethylene terephthalate.**

(57) Thermoplastic blends of aromatic polycarbonate resin, in major amount, poly(ethylene terephthalate), and acrylate-based core-acrylate shell polymer, optionally including a flame retardant agent, are described. The blends are extrudable and moldable into shaped forms which possess good notched impact strength and good weatherability.

**EP 0 107 048 A1**

UNITED STATES PATENT APPLICATION

OF: Richard Brian Allen, Harold Frazee Giles, Jr. Jean Marie Hubert Heuschen and Robert Alan Wiercinski

FOR: ACRYLIC MODIFIED COMPOSITIONS OF POLYCARBONATE AND POLYETHYLENE TEREPHTHALATE

## BACKGROUND OF THE INVENTION

Aromatic carbonate polymers are a well known and available family of materials which enjoy a variety of applications in the field of plastics. These polymers can be prepared by a number of procedures. In one way, the polymer is produced by reacting a dihydric phenol, e.g., 2,2-bis(4-hydroxyphenyl)propane, with a carbonate precursor, e.g., phosgene, in the presence of an acid binding agent.

In general, aromatic polycarbonate resins can be molded or otherwise shaped into articles which possess highly desirable chemical and physical properties, including resistance to attack by mineral acids, resistance to staining, high impact strength in thin walled sections and good dimensional stability. Polycarbonates are known to be admixable with various polyesters, including poly(alkylene terephthalates). Such blends are often more cost effective than the polycarbonate alone. Compositions of polycarbonate resins and polyester are disclosed, for instance, in U.S. Patent No. 3,864,428 (Nakamura, et al.).

Cohen et al., U.S. 4,257,937, describe thermoplastic molding compositions of poly(1,4-butylene terephthalate), optionally also containing poly(ethylene terephthalate), and a modifier composed of a combination of a polyacrylate resin and an aromatic polycarbonate. The compositions can also include fillers and/or reinforcements and flame retardant additives.

Fromuth et al., U.S. 4,264,487, disclose compositions based on aromatic polyesters such as polymeric resins of $C_2$ to $C_8$ alkylene terephthalates, which contain synergistic amounts of acrylate-based core-shell polymer and aromatic polycarbonate. The compositions are described as having high impact strength and an increased heat deflection temperature.

Still other modified polyester compositions are described elsewhere in the patent literature. Dieck et al. in U.S. Patent No. 4,220,735 indicate that a polyblend composed of poly(1,4-butylene terephthalate) resin and poly(ethylene terephthalate) resin can be modified for greater impact strength by including effective amounts of a selectively hydrogenated monoalkenyl arene-diene block copolymer, for example, polystyrene-polybutadiene-polystyrene, together with an aromatic polycarbonate resin.

Gergen et al. in U.S. Patent No, 4,111,895 disclose multi-component polymer blends comprised of polycarbonate, a selectively hydrogenated monoalkenyl arene-diene block copolymer and at least one dissimilar engineering thermoplastic, for example, thermoplastic polyesters. The components are admixed under conditions such that at least two of the polymers form continuous network phases which interlocks with other polymer networks to produce a desirable balance of properties.

Bussink et al. in U.S. Patent No. 4,267,096 teach that the use of a selectively hydrogenated elastomeric block copolymer together with an amorphous polyester improves the melt flow characteristics, resistance to brittle failure and resistance to enviromental stress cracking of polycarbonate resin.

Japanese laid open patent application 044,373 describes thermoplastic molding compositions of polyester resin, e.g., poly(ethylene terephthalate), polycarbonate resin and minor amounts of a third resin obtained by polymerizing a shell comprising aromatic hydrocarbon and, optionally, methacrylate or similar monomer onto a rubbery acrylic core. The composition of these ingredients is said to have excellent moldability, mechanical and thermal properties.

A disadvantage associated with use of poly(alkylene terephthalate) is its relatively low notched impact strength, which this carries over into blends of the polyester with aromatic polycarbonates. It has been proposed that the notched impact strength of poly(alkylene terephthalates) can be improved upon by admixture with an impact modifier systems composed of an aromatic polycarbonate and acrylate based polymer. Compositions of this type are disclosed in U.S. Patent No. 4,257,937 (Cohen, et al.), U.S. 4,264,487 (Fromuth, et al.), and the above-mentioned Japanese patent publication.

INTRODUCTION TO THE INVENTION

The discovery has now been made of new thermoplastic blends capable of being molded, extruded, calendered, or otherwise shaped. The blends are comprised of not substantially less than fifty one percent by weight of an aromatic polycarbonate resin, poly(ethylene terephthalate) resin, which is the only polyester present in the composition, and an acrylate-based core-polymerized acrylate shell polymer.

Preferably, the present kind of compositions will also include an effective amount of a flame retardant agent, as well as one or more additives for stabilizing the blends against deterioration during melt processing and/or upon exposure to ultraviolet light radiation after molding.

## DESCRIPTION OF THE INVENTION

The compositions of the invention will comprise in all cases an aromatic polycarbonate resin. The polycarbonate is preferably a high molecular weight polymer having the formula

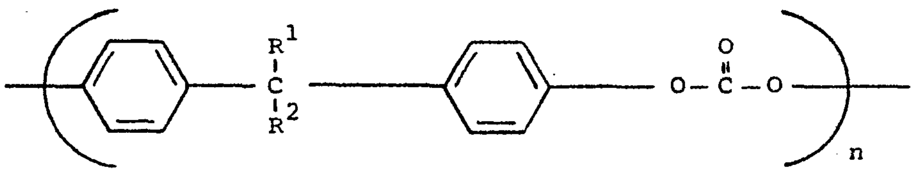

where $R^1$ and $R^2$ are hydrogen, (lower) alkyl or phenyl and n is at least 30, and preferably 40 to 400. The term "(lower) alkyl" includes hydrocarbon groups of from 1-6 carbon atoms.

High molecular weight, thermoplastic aromatic polycarbonates in the sense of the present invention are to be understood as homopolycarbonates and copolycarbonates and mixtures thereof which have a number average molecular weight of about 8,000 to more than 200,000, preferably about 10,000 to 80,000 and an intrinsic viscosity of 0.30 to 1.0 deciliters per gram (dl./g.) as measured in solution in methylene chloride at 25°C. The polycarbonates are derived from dihydric phenols such as, for example, 2,2-bis(4-hydroxyphenyl) propane, bis(4-hydroxyphenyl) methane, 2,2-bis(4-hydroxy-3-methylphenyl) propane, 4,4-bis(4-hydroxyphenyl) heptane, 2,2-(3,5,3',5'-tetrachloro-4,4'-dihydroxyphenyl) propane, 2,2-(3,5,3',5'-tetrabromo-4,4'-dihydroxydiphenyl) propane, and (3,3'-dichloro-4,4'-dihydroxydiphenyl) methane. Other dihydric phenols for use in the preparation of the above polycarbonates are disclosed

in U.S. Patent Nos. 2,999,835; 3,028,365; 3,334,154 and 4,131,575.

The polycarbonates can be manufactured by known processes, such as, for example, by reacting a dihydric phenol with a carbonate precursor such as phosgene in accordance with methods set forth in the above-cited literature and in U.S. Patent Nos. 4,018,750 and 4,123,436, or by transesterification processes such as are disclosed in U.S. Patent No. 3,153,008, as well as other processes known to those skilled in the art.

The aromatic polycarbonates utilized in the present invention also include the polymeric derivatives of a dihydric phenol, a dicarboxylic acid, and carbonic acid, such as are disclosed in U.S. Patent No. 3,169,121.

It is also possible to employ two or more different dihydric phenols or a copolymer of a dihydric phenol with a glycol or acid terminated polyester, or with a dibasic acid in the event a carbonate copolymer or interpolymer rather than a homopolymer is desired for use in the preparation of the aromatic polycarbonate. Also employable are blends of any of the above materials.

Branched polycarbonates, such as are described in U.S. Patent No. 4,001,184, can be utilized, as can blends of a linear polycarbonate and a branched polycarbonate.

The most preferred polycarbonate for use with the present compositions is that prepared from bisphenol-A and phosgene.

As explained, the compositions of the invention will also contain a poly(ethylene terephthalate) resin as

the only polyester in the compositions. Especially preferred is poly(ethylene terephthalate) having an intrinsic viscosity of at least 0.2, and more usually from 0.4 to 1.5 deciliters per gram measured in solution in 60:40 phenol/tetrachloroethane at 25° to 30°C.

Procedures for preparing the poly(ethylene terephthalate) are known to those skilled in the art. The descriptions in U.S. Patent No. 2,465,319 (to Whinfield, et al.) and U.S. Patent No, 3,047,539 (to Pengilly) are helpful.

In addition, the compositions will contain a third polymeric ingredient which is an acrylate-based core-shell polymer. In general this polymer is multi-phase, having a rubbery first stage and a thermoplastic hard final stage, and more specifically is composed of a crosslinked acrylic-based first stage which has been grafted to an outer, rigid thermoplastic stage, optionally including one or more intermediate phases, but never a vinyl aromatic compound, e.g., polymerized styrene.

Preferably, the core-shell polymer is comprised of about 25-95 percent by weight of a first elastomeric phase polymerized from a monomer system of about 75-99.8 percent by weight of a $C_1$-$C_6$ alkyl acrylate, 0.1-5 percent by weight of crosslinking monomer, and 0.1-5 percent by weight of graft linking monomer, and about 75 to 5 percent by weight of a final, rigid thermoplastic phase consisting of polymerized acrylate.

In greater detail, the first stage is polymerized from about 75 to 99.8% by weight of $C_1$-$C_6$ acrylate resulting in an acrylic rubber core having a glass transition temperature (Tg) below 10°C. and is crosslinked with the crosslinking monomer and further contains graft linking monomer. The

crosslinking monomer is polyethylenically unsaturated, such as butylene diacrylate, butylene dimethacrylate, divinylbenzene, trimethylolpropane trimethacrylate, and the like. Such monomers have a plurality of double bonds which addition polymerize at substantially the same rate.

The graft linking monomer is polyethylenically unsaturated and has a plurality of double bonds at least one of which polymerizes at a substantially different rate from at least one of the other reactive groups. Examples of graft linking monomer include allyl methacrylate and diallyl maleate.

The outer, rigid thermoplastic phase of the core-shell polymer is polymerized from a monomer system consisting of 100 weight percent of one or more $C_1$ to $C_4$ alkyl methacrylates.

The core shell polymers employed in this invention are prepared by well known methods, for example, conventional emulsion polymerization techniques. These polymers are described further in U.S. Patent No. 4,096,202 (to Farnham et al.).

An essential feature of this invention is that the compositions always contain at least about fifty one percent by weight of aromatic polycarbonate, based on the combined weights of polycarbonate, poly(ethylene terephthalate) and acrylate-based core shell polymer. In preferred embodiments, the aromatic polycarbonate is present in amounts ranging from about 51 to 97 percent by weight of the three ingredients combined, and correspondingly, the poly(ethylene terephthalate) is employed in the range from about 3 to about 49 percent by weight. The core-shell polymer need be present in only relatively small amounts, for example, from about

3 to about 20 percent by weight, to provide satisfactory notched impact strengths for the composition.

The compositions of the invention can and preferably do contain a flame retardant amount of a flame retardant agent, for example, a brominated polystyrene, decabromobiphenyl ether, bis(tetrabromophthalimide) ethane, pentabromoethylbenzene, 1,2-bis(2,4,6-tribromophthalic anhydride, tetrabromobisphenol-A di-2-hydroxyethyl ether, and the like. In the most preferred cases, the flame retardant agent will be a halogenated polycarbonate, and especially a halogenated bisphenol-A homopolymer or copolymer. These polymers can be derived, for instance, from chlorinated or brominated bisphenol-A, preferred examples being tetrabromo bisphenol-A polycarbonate and tetrachloro bisphenol-A polycarbonate, tetrabromo or tetrachloro bisphenol-A copolycarbonate, statistical mixtures of halogenated bisphenol-A polycarbonates, including chloro-bromo bisphenol-A polycarbonates, and so forth. Processes for preparing such polymers are well documented in the prior art.

Generally, the flame retardant agent will be included in amounts of at least about 5 and more normally from about 10 to about 40 percent of the total weight of the composition.

The compositions can also contain supplementary non-resinous ingredients to improve other chemical and physical properties of the moldings. The additives are selected from among those normally employed in polycarbonate and/or polyester molding compositions, including melt and/or ultraviolet light stabilizers, drip retardants, reinforcing fibers, mineral fillers, dyes, pigments, plasticizers, mold release agents, etc.

Special mention is made of compositions according to this invention which also include from about 0.01 to about 0.5 wt.% of an organic phosphite, e.g., trisnonylphenylphosphite. These are especially processable at high temperatures.

The other, above-mentioned supplementary ingredients are added in minor but effective amounts typically ranging from 0.01 to 45 percent by weight based on the total composition.

Preparation of the compositions may be accomplished by a number of procedures. Illustratively, the ingredients are tumbled in a dry mixer to form a pre-blend, the pre-blend is compounded on an extruder at a temperature from 475 to 600°F., and the extrudate is molded at a temperature of 450 to 600°F. Of course, other procedures well known to those skilled in this art can be used.

The following examples illustrate the invention. These are not intended as a limitation on the scope of the invention. All parts are on a weight basis unless specified otherwise.

EXAMPLE 1

A composition according to this invention was prepared by predrying the following ingredients for 2 hours at 125°C., then extruding through a Leistritz extruder, single screw, low compression ratio: 57% of a polycarbonate derived from bisphenol-A and phosgene, i.v. 0.51 dl/g (LEXAN 125); 35% poly(ethylene terephthalate) (ARNITE A04-102); 7.5% core-shell polymer 40/60 methyl/n-butyl acrylate (Rohm & Haas ACRYLOID KM 330); 0.5% polyethylene (Microthene FN 510); 0.41% of additives and stabilizers. The extruded granules were injection molded after predrying for 2 hours at 125°C., with a barrel temperature of 280°C. and a mold temperature of 50°C. Physical properties were measured on ASTM D 638 tensile bars,ASTM D 256 Izod impact bars, and Falling Dart impact test discs 1/8" thick and 10 cm. in diameter. Heat distortion temperature (1.86 $N/mm^2$ 1/8" ASTM D 648) was 122°C.; tensile modulus was 1990 $N/mm^2$; tensile strength was 49.1 $N/mm^2$, by 0.5 cm/m DR, and 54.5, by 25 cm/m DR; elongation at break, 25 cm/m DR was 140%. The Izod notched impact on 1/8" was 860 J/m at 25°C., 170 J/m at -10°C. and 140 J/m at -40°C.; the ductile/brittle transition temperature was 7°C. Falling dart impact was >200 N/m at 25°C. and 125b at -40°C.

EXAMPLES 2-10

Compositions comprising 60 parts of the polycarbonate of bisphenol-A and phosgene/40 parts of poly-(ethylene terephthalate) of various intrinsic viscosities 10 parts of an acrylate core shell polymer (ACRYLOID KM-330) and 0.1 parts of a phosphite stabilizer are extrusion blended and chopped into molding granules, and injection molded and tested:

| EXAMPLE | 2 | 3 | 4 | 5 | 6 | 7 | 8 | 9 | 10 |
|---|---|---|---|---|---|---|---|---|---|
| PET, i.v., dl/g | 0.6 | 0.72 | 1.01 | .72 | .62 | .70 | .72 | .88 | .59 |
| PROPERTIES | | | | | | | | | |
| Heat distortion temp., 264 psi, °C. | 94 | 97 | 102 | 103 | 93 | 100 | 102 | 91 | 105 |
| Notched Izod impact strength, ft-lbs/in. | 16.2 | 16.8 | 18.1 | 16.3 | 15.3 | 15.8 | 16.4 | 17.1 | 15.2 |
| Flexural modulus, kpsi | 316 | 322 | 314 | 318 | 320 | 320 | 327 | 314 | 317 |
| Flexural strength, kpsi | 11.8 | 12.0 | 11.7 | 11.9 | 12.0 | 11.9 | 12.0 | 11.8 | 11.9 |
| Tensile modulus kpsi | 282 | 282 | 286 | 272 | 259 | 260 | 273 | 287 | 283 |
| Tensile stress at break, kpsi | -- | -- | 7.8 | 7.2 | 7.1 | 7.1 | 7.7 | 6.3 | 7.0 |
| Elongation at break, % | >110 | >110 | 107 | 87 | 89 | 86 | 104 | 92 | 87 |
| Spiral flow, 1/8", 525°F, in. | 19 | 23 | 20½ | 24¼ | 22½ | 21½ | 19$^3/_4$ | 17 | 22¼ |

The results show high impact properties with very little dependence on the intrinsic viscosity of the poly-(ethylene terephthalate) used.

## EXAMPLES 11-23

A number of compositions were prepared with varying ratios of components, and then molded and tested. The formulations used were as follows:

| Example Compositions (pts. by wt.) | 11 | 12 | 13 | 14 | 15 | 16 | 17 | 18 | 19 | 20 | 21 | 22 | 23 |
|---|---|---|---|---|---|---|---|---|---|---|---|---|---|
| Polycarbonate of bisphenol-A and phosgene, i.v. 0.52 dl./g. | 73 | 75.5 | 80 | 68 | 71 | 65.5 | 75.5 | 65.5 | 80 | 60 | 75 | 70 | 60 |
| Poly(ethylene terephthalate), i.v. 0.72 dl./g. | 19 | 19 | 15 | 22.5 | 23 | 30 | 20 | 26.5 | 18 | 38 | 15 | 28 | 30 |
| Acrylic core-shell polymer, ACRYLOID KM 330 | 7.9 | 5.4 | 5 | 10 | 5.8 | 3.9 | 3.9 | 7.9 | 2 | 2 | 10 | 2 | 10 |

The properties obtained were as follows:

| Example | 11 | 12 | 13 | 14 | 15 | 16 | 17 | 18 | 19 | 20 | 21 | 22 | 23 |
|---|---|---|---|---|---|---|---|---|---|---|---|---|---|
| Property | | | | | | | | | | | | | |
| Heat distortion temp., 264 psi, °C. | 113 | 115 | 118 | 110 | 113 | 108 | 116 | 109 | 115 | 107 | 113 | 109 | 101 |
| Notched Izod impact, 1/8"ft.lbs./in. | 16.6 | 17.1 | 17.1 | 15.5 | 17.2 | 17.9 | 18.2 | 16.2 | 17.9 | 1.3 | 15.4 | 2.9 | 18.3 |
| 1/4"ft.lbs./in. | 13.8 | 14.4 | 14.3 | 12.9 | 4.9 | 2.1 | 2.9 | 11.5 | 1.9 | 1.5 | 12.7 | 1.5 | 3.9 |
| Flexural modulus, kpsi | 344 | 353 | 365 | 326 | 353 | 368 | 352 | 345 | 375 | 371 | 331 | 365 | 336 |
| Flexural strength, kpsi | 13.1 | 13.4 | 13.6 | 12.4 | 13.4 | 13.6 | 13.8 | 12.9 | 14.3 | 13.9 | 12.7 | 13.9 | 12.5 |
| Tensile modulus, kpsi | 295 | 319 | 312 | 297 | 322 | 328 | 329 | 311 | 332 | 337 | 295 | 329 | 303 |
| Tensile strength, kpsi | 7.9 | 6.9 | 7.6 | 8.1 | 7.0 | 7.8 | 7.2 | 8.0 | 8.3 | 8.0 | 8.2 | 8.7 | 8.1 |
| Elongation,% | 79 | 56 | 66 | 97 | 66 | 82 | 56 | 92 | 76 | 95 | 89 | 100 | 110 |

All samples had a Gardner impact strength of $>$ 320 inch-lbs.

EXAMPLES 24-26

Flame retardant compositions are prepared by extrusion at 500°F. in a 3/4" Killion machine, and molded at 500°F. set in a 302 Newbury. The formulations used and the results obtained were as follows:

| Example | 24 | 25 | 26 |
|---|---|---|---|
| Composition (parts by weight) | | | |
| Polycarbonate of bisphenol-A and phosgene | 54.3 | 23.5 | 58.6 |
| Poly(ethylene terephthalate) | 22.4 | 30.0 | 19.4 |
| Acrylic modified core-shell polymer resin (ACRYLOID KM-330) | 8.9 | 10.0 | 9.7 |
| Flame retardant oligomer of tetrabromobisphenol-A and phosgene* | 14.2 | -- | -- |
| Flame retardant polymer of (1:1) bisphenol-A:tetrabromobisphenol-A and phosgene* | -- | 36.3 | -- |
| Flame retardant bis(tetrabromophthalimide)ethane | -- | -- | 12.1 |
| Properties | | | |
| Notched Izod impact strength, ft.lbs./in. | 11.1 | 12.0 | 2.4 |
| Flammability rating, Underwriter's Bulletin 94, test | V-0 | V-0 | V-0 |
| Heat distortion temp., 264 psi, °C. | 112 | 102-6 | 106-9 |

* Wambach, U.S. 3,833,685

The above-mentioned patents and/or publications are incorporated in this disclosure by reference. Obviously, other modifications and variations of the invention are possible in the light of the above disclosure. It is to be understood, therefore, that changes may be made in the particular embodiments without departing from the scope or principles of the invention defined in the appended claims.

CLAIMS:

1. A thermoplastic composition comprising an admixture of

(a) an aromatic polycarbonate resin, said polymer being present in an amount not substantially less than 51 percent by weight of the total weight of components (a), (b) and (c);

(b) a poly(ethylene terephthalate) resin which is the only polyester in the composition; and

(c) an acrylate based core-polymerized acrylate shell polymer in an amount effective to improve the notched impact strength of (a) and (b).

2. A composition according to Claim 1, in which the polycarbonate is a high molecular weight aromatic polymer having the formula:

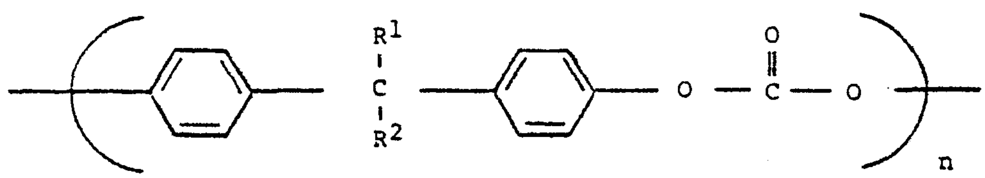

wherein $R^1$ and $R^2$ are hydrogen, (lower) alkyl or phenyl and n is at least 30, and preferably 40 to 400.

3. A composition according to Claim 1, in which the polycarbonate has an intrinsic viscosity of 0.30 to 1.0 deciliters per gram, measured in solution in methylene chloride at 25°C.

4. A composition according to Claim 1, in which the polycarbonate is derived from bisphenol-A and phosgene.

5. A composition according to Claim 1, in which the poly(ethylene terephthalate) has an intrinsic viscosity of 0.2 to 1.5 deciliters per gram, measured in solution in phenol-tetrachloroethane at 25-30°C.

6. A composition according to Claim 1, in which component (c) is a multi-phase interpolymer comprising (A) about 25 to 95 weight percent of a first elastomeric phase polymerized from a monomer system of about 75 to 99.8 weight percent of a $C_1$-$C_6$ acrylate, 0.1 to 5 weight percent of a polyethylenically unsaturated crosslinking monomer having a plurality of addition polymerizable reactive groups all of which polymerize at substantially the same rate of reaction, and 0.1 to 5 weight percent of a graftlinking monomer being polyethylenically unsaturated and having a plurality of addition polymerizable groups at least one of which polymerizes at a substantially different rate from at least one of the other reactive groups, and (B) about 75 to 5 weight percent of a final, rigid thermoplastic phase polymerized from a monomer system consisting of a $C_1$ to $C_4$ alkyl methacrylate.

7. A composition according to Claim 6, in which the graftlinking monomer is allyl methacrylate or diallyl maleate.

8. A composition according to Claim 6, in which the crosslinking monomer is butylene diacrylate.

9. A composition according to Claim 6, in which said final phase consists of polymerized methyl methacrylate.

10. A composition according to Claim 1, which comprises from about 51 to about 97 percent by weight of (a), from about 3 to about 49 percent by weight of (b) and from about 3 to about 20 percent by weight of (c).

11. A composition according to Claim 1, which also contains (d) a flame retardant amount of a flame retardant agent.

12. A composition according to Claim 11, in which the flame retardant agent is a halogenated aromatic polycarbonate.

13. A composition according to Claim 12, in which the flame retardant agent is a copolymer of tetrabromobisphenol-A and bisphenol-A.

14. A composition according to Claim 1, which further includes a melt stabilizing amount of an organic phosphite.

European Patent Office

# EUROPEAN SEARCH REPORT

0107048

Application number

EP 83 10 9435

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,X | EP-A-0 025 920 (ROHM & HAAS)<br>* Claims 1-11 *<br>----- | 1-14 | C 08 L 69/00 //<br>(C 08 L 69/00<br>C 08 L 67/02<br>C 08 L 51/00 ) |
| | | | TECHNICAL FIELDS SEARCHED (Int. Cl. 3) |
| | | | C 08 L |

The present search report has been drawn up for all claims

| Place of search | Date of completion of the search | Examiner |
|---|---|---|
| THE HAGUE | 16-01-1984 | DECOCKER L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82